# EUROPÄISCHE PATENTSCHRIFT

(11) **EP 3 554 895 B1**
(45) Veröffentlichungstag und Bekanntmachung des Hinweises auf die Patenterteilung: **02.03.2022**
(21) Anmeldenummer: 17800704.3
(22) Anmeldetag: 17.11.2017
(51) Int. Cl.: B60R 5/04, B60R 25/24, G07C 9/00

(54) **KRAFTFAHRZEUG MIT WENIGSTENS EINER KLAPPE**
MOTOR VEHICLE HAVING AT LEAST ONE FLAP
VÉHICULE AUTOMOBILE COMPORTANT AU MOINS UN OUVRANT

(30) Priorität: 14.12.2016 DE 102016014864
(43) Veröffentlichungstag der Anmeldung: 23.10.2019
(73) Patentinhaber: Audi AG, 85045 Ingolstadt (DE)
(72) Erfinder: HÉLOT, Jacques, 85051 Ingolstadt (DE); MERTENS, Joris, 85051 Ingolstadt (DE); REDEKER, Immo, 85051 Ingolstadt (DE)
(86) Internationale Anmeldenummer: PCT/EP2017/001354
(87) Internationale Veröffentlichungsnummer: WO 2018/108306

(56) Entgegenhaltungen:
- DE-A1-102012 013 390
- DE-A1-102014 108 760
- DE-A1-102014 115 933
- US-A1- 2007 200 673
- US-A1- 2010 253 519
- US-A1- 2012 043 773
- US-A1- 2012 068 492
- US-A1- 2016 342 943

## Beschreibung

Die Erfindung betrifft ein Kraftfahrzeug mit wenigstens einer Klappe, die zwischen einer geöffneten und einer geschlossenen Position beweglich ist, nach der im Oberbegriff von Anspruch 1 näher definierten Art.

Ein gattungsgemäßes Kraftfahrzeug ist aus der US 2016/0342943 A1 bekannt.

In der DE 10 2012 013 390 A1 ist eine Fernöffnungsvorrichtung eines Fahrzeugs beschrieben.

Eine ähnliche Vorrichtung beschreibt auch die US 2007/0200673 A1.

Eine Vorrichtung zum Öffnen eines verschlossenen Raums ist in der DE 10 2014 108 760 A1 und der DE 10 2014 115 933 A1 beschrieben.

Aus der US 2012/0043773 A1 ist ein Kraftfahrzeug mit einem in einer Stoßstange desselben angeordneten Schubfach bekannt.

Ein gattungsgemäßes Kraftfahrzeug ist aus der US 2012/0068492 A1 bekannt.

Aus der US 2010/0253519 A1 ist ein Kraftfahrzeug bekannt, das eine Aufnahme für mehrere Behälter aufweist.

In jüngster Zeit bestehen Tendenzen, Pakete an Kraftfahrzeuge liefern zu lassen, um auf diese Weise weitere Möglichkeiten zur Zustellung von Paketen zu erschließen. Dies ist insbesondere dann sinnvoll, wenn der Empfänger tagsüber nicht zu Hause ist und in seinem Haus bzw. seiner Wohnung keine Räumlichkeit hat, in der ein Paketbote ein Paket abliefern kann. Beispielsweise kann der Paketbote das Paket in diesem Fall zu dem auf einem Parkplatz vor einem Bürogebäude abgestellten Kraftfahrzeug bringen.

Problematisch bei diesen Vorschlägen ist die Tatsache, dass dem Paketboten über die Kofferraumklappe stets der Zugang zu dem gesamten Kraftfahrzeug gewährt wird. Dies ist nicht nur hinsichtlich möglicher Diebstähle problematisch, sondern verringert auch die Chance auf eine Akzeptanz dieser Vorgehensweise bei Paketdienstleistern, da ein mögliches Abhandenkommen von Gegenständen fälschlicherweise dem Paketboten vorgeworfen werden könnte.

Die DE 10 2014 226 069 A1 beschreibt ein Verfahren zur Übermittlung von zeitnah erworbenen Kaufgütern, bei dem bestimmten Personen Zugang zu einem Fahrzeug gewährt wird, um ihnen zu erlauben, zuvor in deren Ladengeschäft gekaufte Waren in dem Fahrzeug abzulegen. Das dort beschriebene Verfahren kann jedoch zu der oben beschriebenen Problematik hinsichtlich des freien Zugangs zu dem Kofferraum bzw. zu anderen Teilen des Kraftfahrzeugs für den Boten nichts beitragen.

Es ist daher Aufgabe der vorliegenden Erfindung, ein eine zwischen einer geöffneten und einer geschlossenen Position bewegliche Klappe aufweisendes Kraftfahrzeug zu schaffen, bei dem eine Auslieferung von Postsendungen für Dritte möglich ist, der Zugang zu der Gesamtheit des Kraftfahrzeugs jedoch erschwert wird.

Erfindungsgemäß wird diese Aufgabe durch die in Anspruch 1 genannten Merkmale gelöst.

Durch die wenigstens eine weitere, an die Größe einer bestimmten Postsendung angepasste Zugangsöffnung ist es für eine dritte Person, beispielsweise einen Paketboten, möglich, Postsendungen in dem Kraftfahrzeug abzulegen, ohne die eigentliche, den Zugang zum gesamten Kraftfahrzeug ermöglichende Klappe zu öffnen. Dies stellt eine erhebliche Erhöhung der Sicherheit für den Besitzer des Kraftfahrzeugs dar, der es einem Dritten, beispielsweise einem Paketboten, erlaubt, sein Fahrzeug zu öffnen, um Zugang zu demselben zu erlangen. Dabei ist besonders vorteilhaft, dass die Zugangsöffnung an die Größe bestimmter Postsendungen angepasst sein kann, so dass die Abmessung der Zugangsöffnung an die der Postsendungen angepasst sind und beispielsweise kleinere Pakete durch die weitere Zugangsöffnung in dem Kraftfahrzeug abgelegt werden können.

Ein weiterer Vorteil der erfindungsgemäßen Lösung kommt dann zum Tragen, wenn mehrere Personen Pakete in dem Fahrzeug ablegen möchten, da dies durch unterschiedliche Zugangsöffnungen geschehen kann und demnach ein zweiter Bote die zuvor von einem ersten Boten abgelegte Postsendung nicht aus dem Kraftfahrzeug entnehmen kann. Des Weiteren ist vorteilhaft, dass durch eine vorzugsweise kleinere Öffnung bei schlechtem Wetter keine Verschmutzungen bzw. keine Nässe in das Fahrzeug gelangen können.

Dadurch, dass die wenigstens eine weitere Klappe als Teil der ersten Klappe ausgebildet und unabhängig von der ersten Klappe verriegelbar und entriegelbar ist, ergibt sich eine besonders einfach zu realisierende Ausführungsform der Erfindung, die außerdem sehr einfach auch von dritten Personen, wie beispielsweise Paketboten, bedient werden kann.

Erfindungsgemäß sind im Bereich der wenigstens einen weiteren Zugangsöffnung eine Barcodeleseeinrichtung und eine Sendeeinrichtung zum Senden von Nachrichten auf ein Benutzerendgerät angeordnet. Dadurch kann ein Dritter, insbesondere ein Paketbote, auf einfache Weise Zugang zu der für ihn vorgesehenen Zugangsöffnung erlangen und es ist gleichzeitig möglich, Nachrichten über die erfolgte Zustellung der Postsendung an den jeweiligen Empfänger zu verschicken.

Beispielsweise kann vorgesehen sein, dass die wenigstens eine weitere Zugangsöffnung an die Größe eines Standardbriefs angepasst ist. Dies erschwert den Zugang zu dem gesamten Innenraum des Kraftfahrzeugs erheblich, wohingegen ein Standardbrief durch eine solche Öffnung sehr einfach eingeworfen werden kann.

Um die unterschiedlichsten Postsendungen in dem Kraftfahrzeug ablegen zu können, können des Weiteren mehrere weitere Zugangsöffnungen vorgesehen sein.

Nachfolgend sind Ausführungsbeispiele der Erfindung anhand der Zeichnung prinzipmäßig dargestellt.

Es zeigt:
- Fig. 1: Eine Ausführungsform des erfindungsgemäßen Kraftfahrzeugs in einer ersten Position;
- Fig. 2: das Kraftfahrzeug aus Fig. 1 in einer zweiten Position; und
- Fig. 3: eine nicht zu der Erfindung gehörende Ausführungsform eines Kraftfahrzeugs.

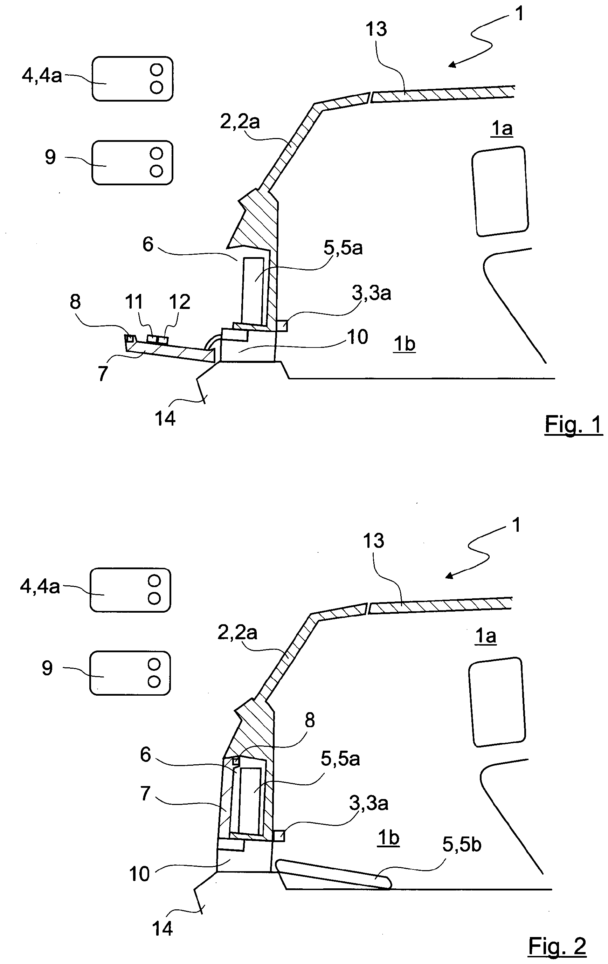

Fig. 1 zeigt den hinteren Teil eines Kraftfahrzeugs 1, das in diesem Bereich eine in an sich bekannter Weise zwischen einer geöffneten und einer geschlossenen Position bewegliche Klappe 2 aufweist, die den Zugang zu einem Innenraum 1a des Kraftfahrzeugs 1 ermöglicht. Bei der Klappe 2 handelt es sich im vorliegenden Fall um eine Kofferraumklappe 2a, die zum Verschließen eines Kofferraums 1b dient und in beiden Figuren 1 und 2 in ihrer geschlossenen Position dargestellt ist.

Die Klappe 2 ist mittels einer nur sehr schematisch angedeuteten, codierten Verriegelungseinrichtung 3, im vorliegenden Fall einem Schloss 3a, verriegelbar und mit einer ebenfalls nur schematisch dargestellten Entriegelungseinrichtung 4, im vorliegenden Fall einem Funkschlüssel 4a, entriegelbar. Selbstverständlich wären statt des Funkschlüssels 4a auch andere Entriegelungseinrichtungen 4 denkbar, wie beispielsweise Karten, entsprechend programmierte Mobiltelefone oder ähnliches. Da sowohl die Verriegelungseinrichtung 3 also auch die Entriegelungseinrichtung 4 und deren jeweilige Funktionsweisen bekannt sind, werden diese hierin nicht näher beschrieben.

Die Klappe 2 weist im vorliegenden Fall eine weitere, an die Größe einer bestimmten Postsendung 5 angepasste Zugangsöffnung 6 auf, die mittels einer weiteren Klappe 7 verschließbar ist. Die weitere Klappe 7 ist in Fig. 1 in ihrem geöffneten und in Fig. 2 in ihrem geschlossenen Zustand dargestellt. Die weitere Klappe 7 ist, in ähnlicher Weise wie die Kofferraumklappe 2, mittels einer codierbaren Verriegelungseinrichtung 8 verriegelbar und mittels einer Entriegelungseinrichtung 9 entriegelbar. Wiederum sind sowohl die Verriegelungseinrichtung 8 als auch die Entriegelungseinrichtung 9 nur sehr schematisch dargestellt. Die Entriegelungseinrichtung 9 ist vorzugsweise mehrfach vorhanden und sollte einem Dritten zur Verfügung stehen, dem das Fahrzeug nicht gehört, beispielsweise einem Paketboten. Dadurch kann der Paketbote mittels der Entriegelungseinrichtung 9 die Verriegelungseinrichtung 8 und somit die Klappe 7 öffnen. Auf diese Weise erhält er Zugang zu der Zugangsöffnung 6 und kann damit die Postsendung 5, in diesem Fall ein Paket 5a, durch die Zugangsöffnung 6 in der Klappe 2 ablegen und anschließend die Klappe 7 schließen, die sich dann vorzugsweise selbsttätig verriegelt. Dadurch kann die Postsendung 5 an das Kraftfahrzeug 1 zugestellt werden, ohne Zugang zu dem Innenraum 1a des Kraftfahrzeugs 1 zu erlangen. Beispielsweise könnten auch mobile Endgeräte des jeweiligen Benutzers, wie beispielsweise Mobiltelefone, als Entriegelungseinrichtungen 4 bzw. 9 ausgebildet sein. In dem in Fig. 1 dargestellten Ausführungsbeispiel ist die weitere Klappe 7 also als Teil der ersten Klappe 2 ausgebildet und kann, mittels der Verriegelungseinrichtung 8, unabhängig von der ersten Klappe 2 verriegelt und mittels der Entriegelungseinrichtung 9 entriegelt werden.

Beispielsweise könnte die Entriegelungseinrichtung 4 so ausgeführt sein, dass mit derselben beide Verriegelungseinrichtungen 3 und 8 geöffnet werden können, wohingegen einem Paketboten nur eine zum Öffnen der Verriegelungseinrichtung 8 geeignete Entriegelungseinrichtung 9 zur Verfügung gestellt werden könnte.

Grundsätzlich könnte vor der Zustellung, zum Beispiel bereits bei der Bestellung, ermittelt werden, welche der Zugangsöffnungen 6, 10 bzw. die durch die Kofferraumklappe 2a geöffnete Zugangsöffnung zu dem Innenraum 1a bzw. dem Kofferraum 1b des Kraftfahrzeugs 1 am besten für die jeweilige Postsendung geeignet ist und der Paketbote könnte in diesem Fall nur den Zugang zu der jeweiligen Zugangsöffnung erhalten. Des Weiteren ist es zu bevorzugen, wenn bei der Bestellung oder bei einer möglichen Terminvereinbarung dem Paketdienstleister die GPS-Daten des Kraftfahrzeugs 1 und vorzugsweise dessen Kennzeichen übermittelt werden.

Bei der Ausführungsform von Fig. 1 ist eine weitere Zugangsöffnung 10 unterhalb der mit der Klappe 7 verschließbaren Zugangsöffnung 6 vorhanden, die mittels einer in diesem Fall nicht dargestellten Klappe verschließbar ist. Die zweite Zugangsöffnung 10 ist im vorliegenden Fall an die Größe eines Standardbriefs 5b angepasst, der in diesem Fall die Postsendung 5 bildet. Gegebenenfalls wäre die weitere Zugangsöffnung 10 auch ohne die zuvor beschriebene Zugangsöffnung 6 realisierbar. Im vorliegenden Fall sind im Bereich der wenigstens einen weiteren Klappe 7 eine Barcodeleseeinrichtung 11 und eine Sendeeinrichtung 12 zum Senden von Nachrichten auf ein Benutzerendgerät, insbesondere auf das Mobiltelefon des Benutzers bzw. Besitzers des Kraftfahrzeugs 1, angeordnet.

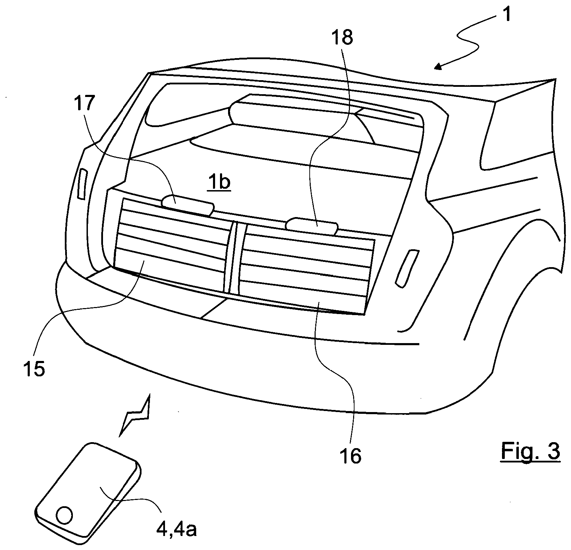

Fig. 3 zeigt eine nicht zu der Erfindung gehörende Ausführungsform des Kraftfahrzeugs 1. Dabei ist wiederum der Kofferraum 1b mittels der in diesem Fall nicht dargestellten, zwischen einer geöffneten und einer geschlossenen Position beweglichen Kofferraumklappe 2a verschließbar. Die Kofferraumklappe 2a weist die ebenfalls nicht dargestellte, codierbare Verriegelungseinrichtung 3 zum Verriegeln derselben und die Entriegelungseinrichtung 4 zum Entriegeln der Verriegelungseinrichtung 3 auf. Da die Kofferraumklappe 2 nicht dargestellt ist, ist auch die Verriegelungseinrichtung 3 nicht dargestellt. Die wiederum als Funkschlüssel 4a ausgebildete Entriegelungseinrichtung 4 ist in Fig. 3 jedoch zu erkennen.

Dabei sind in dem Kofferraum 1b zwei unabhängig voneinander verriegelbare Fächer 15 und 16 angeordnet. Dies ermöglicht es zwei unterschiedlichen, das Kraftfahrzeug 1 benutzenden Personen, ihre jeweiligen Gegenstände in einem der Fächer 15 bzw. 16 unterzubringen. Im vorliegenden Fall sind die beiden Fächer 15 und 16 mittels jeweiliger codierbarer Verriegelungseinrichtungen 17 und 18 verriegelbar. Beispielsweise könnte auch eines der beiden Fächer 15 oder 16 einem Dritten, beispielsweise einem Paketboten, zur Ablage von Postsendungen zur Verfügung gestellt werden.

Die beiden Verriegelungseinrichtungen 17 und 18 können mittels nicht dargestellter Entriegelungseinrichtungen geöffnet werden. Gegebenenfalls lässt sich auch eine der Entriegelungseinrichtungen zum Entriegeln der Verriegelungseinrichtung 17 und/oder 18 in eine der Entriegelungseinrichtungen 4 und/oder 9 integrieren, wenn die in Fig. 3 dargestellte Ausführungsform mit der in den Figuren 1 und 2 dargestellten Ausführungsform kombiniert wird.

## Patentansprüche

1. Kraftfahrzeug (1) mit wenigstens einer Klappe (2), die zwischen einer geöffneten und einer geschlossenen Position beweglich ist, mit einer codierbaren Verriegelungseinrichtung (3) zum Verriegeln der Klappe (2) und mit einer Entriegelungseinrichtung (4) zum Entriegeln der codierbaren Verriegelungseinrichtung (3) und mit
wenigstens einer weiteren, an die Größe einer bestimmten Postsendung (5,5a,5b) angepassten, mittels wenigstens einer weiteren Klappe (7) verschließbaren Zugangsöffnung (6,10), die mittels einer codierbaren Verriegelungseinrichtung (8) verriegelbar und mittels einer Entriegelungseinrichtung (9) entriegelbar ist, wobei die wenigstens eine weitere Klappe (7) als Teil der ersten Klappe (2) ausgebildet und unabhängig von der ersten Klappe (2) verriegelbar und entriegelbar ist,
**dadurch gekennzeichnet, dass**
im Bereich der wenigstens einen weiteren Zugangsöffnung (6,10) eine Barcodeleseeinrichtung (11) und eine Sendeeinrichtung (12) zum Senden von Nachrichten auf ein Benutzerendgerät angeordnet sind.

2. Kraftfahrzeug nach Anspruch 1,
**dadurch gekennzeichnet, dass**
die wenigstens eine weitere Zugangsöffnung (10) an die Größe eines Standardbriefs (5b) angepasst ist.

3. Kraftfahrzeug nach Anspruch 1 oder 2,
**dadurch gekennzeichnet, dass**
mehrere weitere Zugangsöffnungen (6,10) vorgesehen sind.

## Claims

1. Motor vehicle (1) having at least one flap (2) which is movable between an opened and a closed position, having an encodable locking device (3) for locking the flap (2) and having an unlocking device (4) for unlocking the encodable locking device (3) and having
at least one further access opening (6, 10) adapted to the size of a specific postal item (5, 5a, 5b) and able to be closed by means of at least one further flap (7), which access opening can be locked by means of an encodable locking device (8) and can be unlocked by means of an unlocking device (9) wherein the at least one further flap (7) is formed as part of the first flap (2) and can be locked and unlocked independently of the first flap (2),
**characterised in that**
in the region of the at least one further access opening (6, 10) are arranged a barcode reading device (11) and a transmission device (12) for transmitting messages to a user end device.

2. Motor vehicle according to claim 1,
**characterised in that**
the at least one further access opening (10) is adapted to the size of a standard letter (5b).

3. Motor vehicle according to claim 1 or 2,
**characterised in that**
several further access openings (6, 10) are provided.

## Revendications

1. Véhicule automobile (1) avec au moins un ouvrant (2) qui est mobile entre une position ouverte et une position fermée, avec un dispositif de verrouillage (3) codable pour le verrouillage de l'ouvrant (2) et avec un dispositif de déverrouillage (4) pour le déverrouillage du dispositif de verrouillage (3) codable et avec
au moins une autre ouverture d'accès (6, 10) adaptée à la taille d'un envoi postal (5, 5a, 5b) déterminé, refermable au moyen d'au moins un autre ouvrant (7) qui peut être verrouillée au moyen d'un dispositif de verrouillage (8) codable et déverrouillée au moyen d'un dispositif de déverrouillage (9), dans lequel l'au moins un autre ouvrant (7) est réalisé comme partie du premier ouvrant (2) et peut être verrouillé et déverrouillé indépendamment du premier ouvrant (2),
**caractérisé en ce que**
un dispositif de lecture de code barres (11) et un dispositif d'envoi (12) pour l'envoi de messages à un terminal d'utilisateur sont agencés dans la zone d'au moins une autre ouverture d'accès (6, 10).

2. Véhicule automobile selon la revendication 1,
**caractérisé en ce que**
l'au moins une autre ouverture d'accès (10) est adaptée à la taille d'une lettre standard (5b).

3. Véhicule automobile selon la revendication 1 ou 2,
**caractérisé en ce que**
plusieurs autres ouvertures d'accès (6, 10) sont prévues.
